# EUROPÄISCHE PATENTSCHRIFT

(11) **EP 3 216 934 B1**
(45) Veröffentlichungstag und Bekanntmachung des Hinweises auf die Patenterteilung: **13.10.2021**
(21) Anmeldenummer: 17159545.7
(22) Anmeldetag: 07.03.2017
(51) Int. Cl.: E04B 2/74, E06B 3/62, E04B 2/82, E06B 5/16, B32B 17/06

(54) **TRENNWAND ZUR BILDUNG EINES BRANDABSCHNITTS IN RÄUMEN VON GEBÄUDEN**
PARTITION WALL FOR FORMING A FIRE SECTION IN ROOMS OF BUILDINGS
PAROI DE SÉPARATION DESTINÉE À FORMER UNE SECTION ANTI-FEU DANS DES PIÈCES DE BÂTIMENTS

(30) Priorität: 07.03.2016 DE 202016101222 U
(43) Veröffentlichungstag der Anmeldung: 13.09.2017
(73) Patentinhaber: Holzbau Schmid GmbH & Co. KG, 73099 Adelberg (DE)
(72) Erfinder: Schembecker, Andreas, 73035 Göppingen (DE)
(74) Vertreter: Weisbrodt, Bernd

(56) Entgegenhaltungen:
- EP-A1- 1 693 545
- EP-A1- 2 955 312
- EP-A2- 2 754 841
- US-A1- 2006 070 321

## Beschreibung

Die vorliegende Erfindung betrifft eine Trennwand mit wenigstens zwei Einzelwandelementen zur Bildung eines Brandabschnitts in Räumen von Gebäuden, vorzugsweise für Flucht- und Rettungswege.

Im Stand der Technik sind verschiedene Systeme zur Bildung von Trennwänden - sogenannte Trennwandsysteme - bekannt, wobei eine Trennwand in der Regel als sogenannte Ständerwand erstellt wird. Dabei erfolgt zunächst die Montage von sogenannten Ständerwandprofilen aus Metall oder Holz an Wand, Decke und/oder Boden. Anschließend werden diese Profile mit senkrechten und in regelmäßigen Abständen angeordneten, wahlweise vertikalen Profilen aus Metall oder Holz versehen. Die so montierten Profile werden dann beidseitig mit Plattenelementen, beispielsweise aus Gipskarton, versehen. Der dabei zwischen den einander gegenüberstehenden Plattenelementen ausgebildete Zwischenraum kann bei Bedarf mit einem Dämmstoff versehen werden.

Nachteilig bei den aus dem Stand der Technik bekannten Trennwandsystemen ist, dass der Aufbau einer Trennwand zur Bildung eines Brandabschnitts in Räumen von Gebäuden relativ aufwändig ist. Ferner ermöglichen die bisher bekannten Trennwandsysteme nur bedingt eine einfache Demontage von Trennwänden. Bereits für eine Trennwand zur Bildung eines Brandabschnitts in Räumen von Gebäuden verwendete Bauelemente sind dabei in der Regel nicht wiederverwendbar bzw. weiterverwendbar, insbesondere da die Bauelemente der Trennwand individuell an die örtlichen Begebenheiten angepasst wurden und oftmals nicht zerstörungsfrei demontierbar sind.

Ferner sind aus dem Stand der Technik insbesondere für Brandschutzzwecke Trennwände bekannt, die aus jeweils gleichen bzw. gleich aufgebauten Einzelwandelementen gebildet sind. Derartige Trennwände werden beispielsweise zur Aufteilung von Räumen von Gebäuden, insbesondere zur Bildung eines Brandabschnitts in Räumen von Gebäuden, vorzugsweise zur Trennung eines Nutzraums eines Gebäudes von einem Flucht- beziehungsweise Rettungsweg des Gebäudes eingesetzt. Die senkrechten Stoßflächen benachbarter Einzelwandelemente sind üblicherweise Nut-Feder-artig ausgebildet, insbesondere um im raumtrennenden Zustand bzw. in einer raumtrennenden Position auch die Erfordernisse für einen Rauch- und/oder Brandschutz erfüllen zu können und im Brandfall einen Übertritt von Rauch- und/oder Feuer durch Abdichtung verhindern zu können.

Auch sind Lösungen bekannt, bei denen die senkrechten Stoßflächen der Einzelwandelemente stumpf aneinander stoßen und verbleibende Fugen zwischen den Stoßflächen der Einzelwandelemente verspachtelt werden.

Bei den vorbekannten Trennwandlösungen sind im Brandfall insbesondere im Bereich der Stoßflächen der nebeneinander angeordneten Einzelwandelemente erhöhte Temperaturbelastungen gegeben. Eine erhöhte Temperaturbelastung in diesem Bereich wirkt sich dabei besonders nachteilig auf die Rauch- und Brandschutzeigenschaften der vorbekannten Trennwände aus, insbesondere da dadurch die Feuerwiderstandsdauer reduziert wird. Ferner erfordert jedes Einzelwandelement ein an den Stoßflächen mit entsprechender Nut beziehungsweise Feder versehenes Element und/oder ein Verspachteln der Fugen zwischen den Stoßflächen der Einzelwandelemente, wodurch die Herstellung dieser Trennwände aufwändig und relativ kostenintensiv ist. Darüber hinaus können Nut- bzw. Federelemente im Rahmen von Transport und/oder Montage beschädigt werden, wodurch die Einzelwandelemente mitunter unbrauchbar werden.

Darüber hinaus sind bei den bisher aus dem Stand der Technik bekannten Trennwänden für Brandschutzzwecke alle Einzelwandelementen aus demselben brandgeschützten Material gefertigt, insbesondere da die Verwendung von Einzelwandelementen aus unterschiedlichen Materialen insbesondere im Bereich der senkrechten Stoßflächen benachbarter Einzelwandelemente ein unterschiedliches und nicht vorhersehbares bzw. kontrollierbares Verformverhalten mit sich bringen würde, was aus rauch- und brandschutztechnischen Gründen nicht akzeptabel und funktionsfähig ist. Nachteilig bei den bekannten Trennwänden ist dabei ferner, dass die Gestaltungsmöglichkeiten durch die Verwendung von Einzelwandelementen desselben Materials eingeschränkt sind.

Ferner offenbart die EP 1 693 545 A1 eine Glasschiebewand aus mindestens zwei, vorzugsweise aus Brandschutzscheiben bestehenden Schiebewandteilen, die an einer oberen Laufschiene mittels jeweils zwei Laufwagen verfahrbar aufgehängt und am unteren waagerechten Rand geführt sind.

Vor diesem Hintergrund liegt der vorliegenden Erfindung die Aufgabe zugrunde, eine Trennwand bereitzustellen, die einfach montier- und demontierbar ist und eine einfache und kostengünstige Wiederverwendbarkeit der Einzelwandelemente für eine Trennwand ermöglicht. Darüber hinaus soll die erfindungsgemäße Trennwand hinsichtlich der verwendbaren Einzelwandelemente eine größere Variabilität in Bezug auf Aufbau und/oder Materialen ermöglichen und dabei gleichzeitig den Erfordernissen von Rauch- und/oder Brandschutz genügen.

Zur technischen Lösung der vorgenannten Aufgabe wird mit der vorliegenden Erfindung eine Trennwand mit wenigstens zwei Einzelwandelementen zur Bildung eines Brandabschnitts in Räumen von Gebäuden gemäß Anspruch 1 vorgeschlagen.

Dabei sind die an bzw. in der Deckenschiene gehalterten Einzelwandelemente vorteilhafterweise modular zusammengefügt oder zusammerifügbar. Hierdurch wird insbesondere eine hohe Variabilität in der Gestaltung der Trennwand erreicht, da die Einzelwandelemente der Trennwand quasi nach Art eines Baukastenprinzips zusammenstellbar und zusammenfügbar sind. Die Einzelwandelemente können dabei vorteilhafterweise unterschiedliche Breiten aufweisen, so dass die Trennwand beispielsweise aus wenigstens zwei Einzelwandelementen besteht, die jeweils unterschiedlich breit sind. Dabei variiert die Breite eines Einzelwandelementes der Trennwand vorzugsweise von etwa 80mm bis etwa 1250 mm. Eine weitere Ausgestaltung der Erfindung sieht vor, dass Einzelwandelemente der Trennwand auch übereinander angeordnet sind. Eine weitere vorteilhafte Ausgestaltung der Erfindung sieht ferner eine Kombination von nebeneinander und/oder übereinander angeordneten Einzelwandelementen vor. Die erfindungsgemäße Trennwand umfasst dabei vorteilhafterweise wenigstens zwei Einzelwandelemente, wobei deren horizontale und/oder vertikalen Stoßflächen vorzugsweise flächenbündig und formschlüssig zueinander angeordnet sind, und wenigstens ein Einzelwandelement der wenigstens zwei Einzelwandelemente eine nicht brennbare Baustoffplatte oder ein feuerfestes Holzelement ist und wenigstens ein Einzelwandelement der Einzelwandelemente eine Brandschutzscheibe aufweist oder ist.

Die erfindungsgemäße Lösung ermöglicht so einen modulartigen Aufbau von Trennwänden aus Einzelwandelementen, wobei die Trennwand einfach montierbar bzw. demontierbar ist und die Einzelwandelemente einfach und kostengünstig insbesondere zur Bildung einer anderen Trennwand wiederverwendbar sind. Besonders vorteilhaft ist die Verwendung der erfindungsgemäßen Trennwand insbesondere bei großen Bürogebäuden oder dergleichen Gebäuden, da diese hinsichtlich der Raumaufteilung häufig wechselnden Nutzungsanforderungen, beispielsweise durch den Einzug neuer Mieter, unterliegen. Dabei ermöglicht die erfindungsgemäße Lösung vorteilhafterweise auf einfache und kostengünstige Art und Weise ebenfalls eine Anpassung an die Raumnutzung des Gebäudes in Bezug auf die Bildung von Flucht- bzw. Rettungswegen und den damit verbundenen Anforderungen für einen Rauch- und/oder Brandschutz. So wird insbesondere auch eine einfache und kostengünstige Veränderung der Führung bzw. des Verlaufs von Flucht- und Rettungswegen ermöglicht, indem der mit einer erfindungsgemäßen Trennwand gebildete Flucht- und Rettungsweg einfach demontiert und an einer neuen Position entsprechend der geänderten Führung bzw. des geänderten Verlaufs eines Flucht- und Rettungsweges wieder montiert wird. Dabei weist die erfindungsgemäße Trennwand vorteilhafterweise alle physikalischen Eigenschaften auf, die die jeweilige Bauordnung stellt.

Vorteilhaft an der erfindungsgemäßen Lösung ist ferner, dass eine Trennwand aus Einzelwandelementen realisierbar ist, bei welcher die Einzelwandelemente aus unterschiedlichen Materialen bestehen, die die erforderlichen Anforderungen und/oder Normen hinsichtlich Rauch- und/oder Brandschutz erfüllen und vorzugsweise zudem jeweils im Wesentlichen gleiche Brandschutzeigenschaften, insbesondere Verformungsverhalten, aufweisen. Vorteilhafterweise werden die europäischen Normen im Hinblick auf Rauch- und/oder Brandschutz, insbesondere hinsichtlich der Feuerwiderstandsdauer, trotz der Verwendung von Einzelwandelementen aus unterschiedlichen nicht brennbaren beziehungsweise feuerfesten Materialien erfüllt bzw. eingehalten. Da eine einfache Konstruktion bezüglich der Ein- und Ausbaubarkeit der Einzelwandelemente gegeben ist, die darüber hinaus durch die Verwendung von Einzelwandelementen unterschiedlichen Materials höchst dekorativ ist, sind die erfindungsgemäßen Gestaltungsmöglichkeiten äußerst umfangreich. Die Gestaltungsmöglichkeiten sind dabei insbesondere aufgrund der erfindungsgemäßen Verwendung von unterschiedlich ausgebildeten Einzelwandelementen weiter steigerbar, indem wenigstens ein Einzelwandelement der wenigstens zwei Einzelwandelemente eine nicht brennbare Baustoffplatte oder ein feuerfestes Holzelement ist und wenigstens ein Einzelwandelement der wenigstens zwei Einzelwandelemente eine Brandschutzscheibe aufweist oder ist. Dabei können vorteilhafterweise insbesondere die nicht brennbaren Baustoffplatten mit einer nicht brennbaren Dekorschicht versehen sein, mittels welcher unterschiedlichste optische Varianten, beispielsweise hinsichtlich Farbe, Holzdekor oder dergleichen realisierbar sind.

Der Deckenanschluss der Einzelwandelemente mittels einer im Deckenbereich des Brandabschnitts angeordneten und den Einzelwandelementen zu Trag- und/oder Führungszwecken dienenden Deckenschiene ist vorteilhaftweise mittels eines U-förmigen oder T-förmigen Profils, vorzugsweise aus Metall, verwirklicht. Die Deckenschiene ist vorzugsweise mittels einzelner Winkel an der Decke beziehungsweise einem raumbegrenzenden Festelement des Gebäudes, beispielsweise einer Wand des Gebäudes, befestigt. Die Einzelwandelemente können dabei vorteilhafterweise beweglich an der im Deckenbereich angeordneten Deckenschiene aufgehängt sein. Dies ermöglicht beispielsweise die Überführung der Einzelelemente der Trennwand von einer raumfreigebenden Position in eine raumtrennende Position. Vorteilhafterweise können dazu die Einzelwandelemente gegenüber der Tragschiene verdreht beziehungsweise verschwenkt werden und zudem entlang der Tragschiene verschoben werden. Beispielsweise bewirkt eine Verdrehung beziehungsweise Verschwenkung wenigstens eines der Einzelwandelemente um eine vertikal zur Decke verlaufenden Drehachse eine Mobilität des wenigstens einen Einzelwandelements, insbesondere um eine einfache Ein- und Ausbaubarkeit des wenigstens einen Einzelwandelements der Trennwand weiter unterstützen zu können.

In einer vorteilhaften Ausgestaltung der Erfindung sind die wenigstens zwei Einzelwandelemente an bzw. in einer im Bodenbereich des Brandabschnitts angeordneten und den Einzelwandelementen zu Halte- bzw. Führungszwecken dienenden Bodenschiene geführt. Die Bodenschiene ist vorteilhaftweise mittels eines U-förmigen oder T-förmigen Profils, vorzugsweise aus Metall, verwirklicht, vorzugsweise derart, dass die der Bodenschiene zugewandte Seite eines Einzelwandelementes in die Bodenschiene eingreift beziehungsweise derart mit der Bodenschiene verbunden ist, dass das Einzelwandelement lediglich in Längsrichtung der Führungsschiene gegenüber der Führungsschiene bewegbar ist. Dadurch wird insbesondere die Montage bzw. Demontage einer erfindungsgemäßen Trennwand weiter vereinfacht. Vorteilhafterweise wird zur Montage eines Einzelwandelements der Trennwand dieses Einzelwandelement mit seiner oberen, horizontal zum Boden bzw. zur Decke verlaufenden Seite bzw. Kante in die Deckenschiene eingesetzt und anschließend mit seiner unteren, horizontal zum Boden bzw. zur Decke verlaufenden Seite bzw. Kante in die im Bodenbereich des Brandabschnitts angeordnete Bodenschiene eingesetzt. Damit ist das Einzelwandelement an bzw. in der Deckenschiene gehalten und an bzw. in der Bodenschiene geführt. Bei einer Demontage der Trennwand sind die vorstehend angeführten Montageschritte in umgekehrter Reihenfolge durchzuführen.

Zur weiteren Verbesserung der Brandschutzeigenschaften ist erfindungsgemäß vorgesehen, dass an bzw. in der Deckenschiene und/oder an bzw. in der Bodenschiene ein Dichtungsprofil und/oder eine Dichtmasse, wie beispielsweise Silikon oder dergleichen, und/oder ein intumeszierendes Material angeordnet sind, vorzugsweise derart, dass ein etwaig zwischen einem Einzelwandelement und der Deckenschiene beziehungsweise der Bodenschiene vorhandener Spalt abgedichtet ist bzw. abdichtbar ist. Auch ist vorgesehen, dass das Dichtungsprofil aus einem intumeszierendes Material ist oder ein solches aufweist.

In einer weiteren vorteilhaften Ausgestaltung der Erfindung ist vorgesehen dass senkrecht verlaufende Stoßflächen von zwei in einem raumtrennenden Zustand bzw. in einer raumtrennenden Position nebeneinander angeordneten Einzelwandelementen einander gegenüberstehen oder aneinander stoßen, vorzugsweise flächenbündig und/oder formschlüssig. Vorteilhafterweise wird dadurch eine weiter verbesserte Gesamtoptik der Trennwand erzielt, insbesondere da so keine mitunter optisch störenden hervorspringende Teile bzw. Elemente vorhanden sind und somit insbesondere ein klarer und funktionaler ästhetischer Eindruck vermittelt wird. Ferner wird so die Funktionalität der erfindungsgemäßen Trennwand weiter verbessert, insbesondere da durch die Vermeidung beispielsweise von Versätzen und/oder Vorsprüngen als hervorspringenden Teilen bzw. Elementen die im Brandfall gegebene Temperaturbelastung über die gesamte Fläche der Einzelwandelemente der Trennwand weitestgehend gleich verteilt bleibt, vorzugsweise derart, dass sich keine sogenannten "Hotspots" bilden, wodurch sich die Feuerwiderstandsdauer der erfindungsgemäßen Trennwand weiter verbessert.

In einer vorteilhaften Ausgestaltung sind die Einzelwandelemente in einem raumfreigebenden Zustand bzw. in einer raumfreigebenden Position voneinander lösbar, insbesondere rückstandsfrei lösbar, und wiederverwendbar. Vorteilhafterweise sind dabei keine bzw. nur geringe Bearbeitungen an den Einzelwandelementen der erfindungsgemäßen Trennwand erforderlich.

In einer weiteren vorteilhaften Ausgestaltung der Erfindung ist zwischen den senkrecht verlaufenden Stoßflächen von zwei in einem raumtrennenden Zustand bzw. in einer raumtrennenden Position nebeneinander angeordneten Einzelwandelementen wenigstens ein Dichtungselement, vorzugsweise ein Dichtungsprofil oder eine Dichtungsmasse, wie beispielsweise ein Silikonprofil und/oder Silikon oder dergleichen Dichtungsmasse, angeordnet. Vorteilhafterweise ist vorgesehen, dass das wenigstens eine Dichtungselement, vorzugsweise Dichtungsprofil, an der senkrecht verlaufenden Stoßfläche wenigstens eines Einzelwandelementes befestigt ist bzw. befestigbar ist. Vorteilhafterweise weist das wenigstens eine Dichtungselement ein intumeszierendes Material auf oder ist aus einem intumeszierenden Material. Das intumeszierende Material verbessert die Zuverlässigkeit der Brandschutzabdichtung. Im Brandfall schäumt das intumeszierende Material auf und dichtet die angrenzenden Einzelwandelemente gegeneinander und/oder gegen die angrenzenden Festelemente der Trennwand des Brandabschnitts ab, insbesondere derart, dass der Durchtritt von Feuer und Rauch wirksam unterbunden werden. Vorzugsweise ist das Dichtungselement als Dichtungsschnur ausgebildet, die einen besonders einfachen Einbau bzw. Ausbau ermöglicht. Durch das Dichtungselement wird vorteilhafterweise der Übertritt von Feuer und Rauch, insbesondere durch einen etwaigen Spalt zwischen den senkrechten Stoßflächen zwischen zwei Einzelwandelementen, noch besser verhindert. Das als Dichtungselement vorgesehene Dichtungsprofil bzw. die Dichtungsmasse genügt vorzugsweise Brandschutzzwecken und/oder Rauchschutzzwecken, insbesondere gemäß DIN 4102 beziehungsweise DIN EN 13501 oder DIN 18095 beziehungsweise DIN EN 1364-3.

Eine weitere Ausgestaltung der Erfindung sieht vor, dass sowohl die Einzelwandelemente als auch das wenigstens eine zwischen den senkrecht verlaufenden Stoßflächen von zwei in einem raumtrennenden Zustand bzw. in einer raumtrennenden Position nebeneinander angeordneten Einzelwandelementen vorgesehene Dichtungselement oder -anordnung rückstandsfrei voneinander lösbar sind. Im Rahmen der Montage der Trennwand werden die Einzelwandelemente einfach in die im Deckenbereich des Brandabschnitts angeordnete Deckenschiene eingestellt. Ein Dichtungsprofil wird an wenigstens einer der senkrechten Stoßflächen eines Einzelwandelementes angeordnet beziehungsweise eingebracht. Dies kann entweder schon vor der Montage der Einzelwandelemente erfolgen bzw. erfolgt sein oder erst im Rahmen der Montage der Trennwand vor Ort erfolgen. Anschließend werden die Einzelwandelemente in die raumtrennende Position überführt, in der die Einzelwandelemente flächenbündig und vorzugsweise formschlüssig zueinander angeordnet sind. Entsprechend einfach gestaltet sich die Demontage der Trennwand. Das Dichtungsprofil ist vorzugsweise manuell entfernbar, beispielsweise aus dem zwischen den senkrechten Stoßflächen ausgebildeten Spalt durch Ziehen bzw. Rausziehen entfernbar, so dass anschließend nur noch die Einzelwandelemente aus der Deckenschiene ausgehängt werden müssen.

Eine bevorzugte Ausgestaltung der Erfindung sieht vor, dass wenigstens eine der senkrechten Stoßflächen eines Einzelwandelementes im Wesentlichen abgestumpft ausgebildet ist. Die Stoßfläche ist also im Wesentlichen eben beziehungsweise plan ausgebildet. Vorteilhafterweise sind alle Stoßflächen eines Einzelwandelementes der Trennwand im Wesentlichen abgestumpft ausgebildet, so dass die Einzelwandelemente in beliebiger Kombination bzw. Anordnung in einer raumtrennenden Position zusammensetzbar beziehungsweise zusammenfügbar sind. Durch die stumpfe Ausbildung der Stoßfläche eines Einzelwandelementes ist die erfindungsgemäße Trennwand besonders einfach modular zusammensetzbar beziehungsweise zusammenfügbar. Die Trennwand bildet also im Verbindungsbereich zweier Einzelwandelemente zueinander einen stumpfen Verbund aus. In Abgrenzung zu einer feststehenden Verglasung aus zwei nebeneinander oder übereinander angeordneten Glasscheiben, insbesondere Brandschutzscheiben, bei der die horizontalen und/oder vertikalen Fugen zwischen den Stoßkanten zweier Glasscheiben, insbesondere Brandschutzscheiben, ausschließlich durch eine Verfugung miteinander verbunden sind, wie dies insbesondere bei einer sogenannten Silikonfugenverglasung gegeben ist, ist die erfindungsgemäße Anordnung der Einzelwandelemente vorteilhafterweise zwischen einem als Brandschutzscheibe ausgebildeten Einzelelement und einem als nicht brennbare Baustoffplatte oder als feuerfestes Holzelement ausgebildeten Einzelwandelement gegeben, die mit ihren Stoßflächen einander stumpf gegenüberstehen, wobei die Fuge zwischen den Stoßflächen mit einer Dichtungsanordnung versehen, insbesondere verfugt ist.

Eine weitere vorteilhafte Ausgestaltung der Erfindung sieht vor, dass bei zwei in einem raumtrennenden Zustand bzw. in einer raumtrennenden Position nebeneinander angeordneten Einzelwandelementen die senkrecht verlaufende Stoßfläche des einen Einzelwandelements gegenüber der senkrecht verlaufenden Stoßfläche des anderen Einzelwandelements unter Ausbildung eines Stufenfalzes zurück springt. Der erfindungsgemäße Stufenfalz erzeugt vorteilhafterweise eine Überlappung, welche insbesondere die Dichtwirkung zwischen zwei angrenzenden Einzelwandelementen der Trennwand durch die Umlenkung von durchgehender Zugluft und/oder Gasen erhöht. Vorteilhafterweise ist erfindungsgemäß vorgesehen, dass der Stufenfalz mit weiteren Funktionselementen versehen ist bzw. versehbar ist, wie beispielsweise mit einem Dichtungselement und/oder einem intumeszierenden Material. Dabei kann das Dichtungselement und/oder das intumeszierende Material derart in dem Stufenfalz angeordnet sein, dass das Dichtungselement und/oder das intumeszierende Material von außen nicht sichtbar sind, so dass der ästhetische und dekorative Gesamteindruck der Trennwand nicht gestört und somit weiter verbessert wird.

In einer weiteren Ausgestaltung der Erfindung ist wenigstens ein Einzelwandelement als Brandschutztür, vorzugsweise als Ganzglas-Brandschutztür, ausgebildet. Die Brandschutztür ist vorteilhafterweise einflügelig oder zweiflügelig ausgestaltet. Ferner ist vorgesehen, dass die Brandschutztür mit Zarge oder ohne Zarge ausgebildet ist. Zur Erfüllung der Anforderungen von Rauch- und/oder Brandschutznormen sind vorteilhafterweise sämtliche Teile bzw. Elemente der Brandschutztür, wie Türblatt, Dichtungen, Türbänder, Türklinken und/oder dergleichen, feuerfest ausgebildet. Eine bevorzugte Ausgestaltung der Erfindung sieht vor, dass die Brandschutztür an ihrer der Decke beziehungsweise dem Boden zugewandten Fläche über einen Drehzapfen in einem an bzw. in der Decke bzw. dem Boden ausgestalteten Drehlager verschwenkbar gelagert ist.

Eine weitere Ausgestaltung der Erfindung sieht vor, dass wenigstens ein Einzelwandelement händisch und/oder motorisch von einer raumtrennenden Position in eine raumfreigebende Position überführbar ist. Dabei liegen in der raumfreigebenden Position - nachfolgend auch Parkposition genannt - wenigstens zwei Einzelwandelemente der Trennwand derart voreinander, dass die Haupt- bzw. Sichtflächen der Einzelwandelemente einander zumindest teilweise gegenüberstehen.

In einer weiteren bevorzugten Ausgestaltung der Erfindung besteht die Brandschutzscheibe eines Einzelwandelements bzw. eines als Brandschutztür ausgebildeten Einzelwandelements aus einem Verbund von wenigstens zwei parallel zueinander angeordneten Glasscheiben, zwischen denen jeweils wenigstens eine Brandschutzschicht angeordnet ist. Vorzugsweise ist die Brandschutzscheibe bzw. die Brandschutztür derart ausgebildet, dass diese der DIN 4102 beziehungsweise DIN EN 13501 genügt bzw. diese erfüllt. Eine solche für Rauch- und/oder Brandschutzzwecke geeignete Brandschutzscheibe bzw. Brandschutztür verhindert vorteilhafterweise den Durchgang von Feuer und/oder Rauch von einem Brandabschnitt bzw. Raum in einen anderen Brandabschnitt bzw. Raum. Im Brandfall wird die Brandschutzschicht zwischen den parallelen Glasscheiben aktiviert, wodurch die Wärmestrahlung absorbiert wird und eine hochwirksame Dämmschicht gebildet wird.

Vorteilhafterweise sind bei der erfindungsgemäßen Trennwand Brandschutzscheiben gemäß der sogenannten Wasserglas-Technologie und/oder gemäß der sogenannten Gel-Technologie verwendbar. Bei einer Brandschutzscheibe nach der Wasserglas-Technologie finden als Brandschutzschicht jeweils zwischen einer Vielzahl von Glasscheiben angeordnete, insbesondere eine Alkalisilikatmasse enthaltende Materialien Verwendung, welche im Brandfall als Schaumbildner wirken und aufschäumen. Bei einer Brandschutzscheibe nach der Gel-Technologie ist die zwischen zwei Glasscheiben angeordnete Brandschutzschicht, welche im Brandfall aktiviert wird, aus gelartigen Materialien gebildet, insbesondere organischen Polymeren. Bei der Gel-Technologie sind die beiden Glasscheiben der Brandschutzscheibe mittels eines einen Randverbund ausbildenden profilartigen Abstandhalters voneinander beabstandet angeordnet.

Eine bevorzugte Ausgestaltung der Erfindung sieht vor, dass die nicht brennbare Baustoffplatte oder das feuerfeste Holzelement zwei parallel zueinander angeordnete Grundplatten aufweist, die mittels eines zwischen den Grundplatten angeordneten Abstandhalters voneinander beabstandet sind. Vorteilhafterweise stabilisiert der Abstandhalter die Grundplatten der nicht brennbaren Baustoffplatte bzw. das feuerfeste Holzelement im Brandfall. Der dazu erfindungsgemäß vorgesehene Abstandshalter zwischen den Grundplatten eines Einzelwandelementes das als nicht brennbare Baustoffplatte bzw. als feuerfestes Holzelement ausgestaltet ist, ermöglicht vorteilhafterweise ein im Wesentlichen gleiches Verformverhalten der entsprechenden Einzelwandelemente der erfindungsgemäßen Trennwand und verbessert so die Rauch- und/oder Brandschutzeigenschaften der Einzelwandelemente. Der Abstandhalter ist vorteilhafterweise fest mit den jeweiligen Grundplatten verbunden, vorzugsweise über eine vollflächige Verklebung. Hierdurch stabilisiert der Abstandhalter die nicht brennbare Baustoffplatte beziehungsweise das feuerfeste Holzelement, so dass das Verformverhalten bzw. das Verzugsverhalten der Grundplatten im Brandfall weitestgehend vereinheitlicht und damit verbessert wird. Dadurch werden die Gestaltungsmöglichkeiten der erfindungsgemäßen Lösung insbesondere für Rauch- und/oder Brandschutzzwecke weiter verbessert. Der die nicht brennbare Baustoffplatte beziehungsweise das feuerfeste Holzelement insbesondere im Brandfall stabilisierende Abstandshalter ist vorteilhafterweise profilartig aus einem Holzwerkstoff, einem Verbundmaterial aus Holz und Stahl, oder einem Verbundmaterial aus Kalziumsilikat und Stahl und/oder Holz. Ferner ist die Verwendung von vorzugsweise nicht brennbaren, Kunststoffprofilen, vorzugsweise Glasfaser-verstärkten Kunststoffprofilen als Abstandshalter vorgesehen.

Eine besonders bevorzugte Ausgestaltung der Erfindung sieht vor, dass die Grundplatte der nicht brennbaren Baustoffplatte aus einem nicht brennbaren silikatischen Material und einer mit der Grundplatte verklebten, nicht brennbaren Dekorschicht besteht, wobei auf der Dekorschicht vorzugsweise eine Deckschicht aus Melaminharz aufgebracht ist.

In einer weiteren Ausgestaltung der Erfindung ist bzw. sind das feuerfeste Holzelement bzw. die Grundplatten des Holzelementes aus Massivholz und/oder einem Holzwerkstoff. Als Holzwerkstoff im Sinne der vorliegenden Erfindung werden insbesondere Werkstoffe verstanden, die durch Zerkleinern von Holz und anschließendes Zusammenfügen der so gewonnenen Strukturelemente erzeugt werden. Größe und Form der Holzpartikel entscheiden dabei über die Art des Holzwerkstoffes und seine Eigenschaften. Die Holzpartikel können dabei ferner mit oder ohne Bindemittel miteinander verbunden sein. Als Holzwerkstoffe im Sinne der Erfindung gelten insofern beispielsweise Spanplatten, Faserplatten, Sperrhölzer und/oder dergleichen.

Gemäß einem nicht beanspruchten Beispiel wird ein Einzelwandelement für eine erfindungsgemäße Trennwand vorgeschlagen, welches dadurch gekennzeichnet ist, dass dieses eine nicht brennbare Baustoffplatte oder ein feuerfestes Holzelement ist, bestehend aus zwei parallel zueinander angeordneten Grundplatten, die mittels eines zwischen den Grundplatten angeordneten Abstandhalters voneinander beabstandet sind. Dabei ist der Abstandhalter vorteilhafterweise derart ausgestaltet, dass dieser die Grundplatten der nicht brennbaren Baustoffplatte bzw. des feuerfesten Holzelements im Brandfall stabilisiert. Vorteilhafterweise ist ferner vorgesehen, den von den Grundplatten und dem Abstandshalter gebildeten Zwischenraum eines Einzelwandelements mit einem Füllstoff, vorzugsweise einem nicht brennbaren Füllstoff oder einem intumeszierenden Material auszufüllen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer Ansicht von vorne ein Ausführungsbeispiel einer erfindungsgemäßen Trennwand in einer raumtrennenden Position;
- Fig. 1b: in einer Ansicht von vorne ein weiteres Ausführungsbeispiel einer erfindungsgemäßen Trennwand in einer raumtrennenden Position;
- Fig. 1c: in einer geschnittenen Teilansicht ein Ausführungsbeispiel für die Ausgestaltung der Stoßflächen von zwei nebeneinander angeordneten Einzelwandelementen einer erfindungsgemäßen Trennwand;
- Fig. 1d: in einer geschnittenen Teilansicht ein weiteres Ausführungsbeispiel für die Ausgestaltung der Stoßflächen von zwei nebeneinander angeordneten Einzelwandelementen einer erfindungsgemäßen Trennwand;
- Fig. 2: in einer geschnittenen Teilansicht gemäß Schnittlinie I-I nach Fig. 1 ein Ausführungsbeispiel einer erfindungsgemäßen Trennwand in einer raumtrennenden Position;
- Fig. 3: in einer geschnittenen Teilansicht gemäß Schnittlinie II-II nach Fig. 1 ein Ausführungsbeispiel einer erfindungsgemäßen Trennwand in einer raumtrennenden Position; eine Ansicht gemäß Schnittlinie II-II nach Fig. 1;
- Fig. 4: in einer geschnittenen Seitenansicht gemäß Schnittlinie III-III nach Fig. 1b ein Ausführungsbeispiel einer erfindungsgemäßen Trennwand in einer raumtrennenden Position;
- Fig. 5: in einer geschnittenen Seitenansicht gemäß Schnittlinie III-III nach Fig. 1 ein weiteres Ausführungsbeispiel einer erfindungsgemäßen Trennwand in einer raumtrennenden Position;
- Fig. 6: in einer geschnittenen Seitenansicht gemäß Schnittlinie III-III nach Fig. 1b ein weiteres Ausführungsbeispiel einer erfindungsgemäßen Trennwand in einer raumtrennenden Position;
- Fig. 7: in einer geschnittenen Seitenansicht gemäß Schnittlinie III-III nach Fig. 1 ein weiteres Ausführungsbeispiel einer erfindungsgemäßen Trennwand in einer raumtrennenden Position; und
- Fig. 8: in einer geschnittenen Seitenansicht gemäß Schnittlinie III-III nach Fig. 1b ein weiteres Ausführungsbeispiel einer erfindungsgemäßen Trennwand in einer raumtrennenden Position.

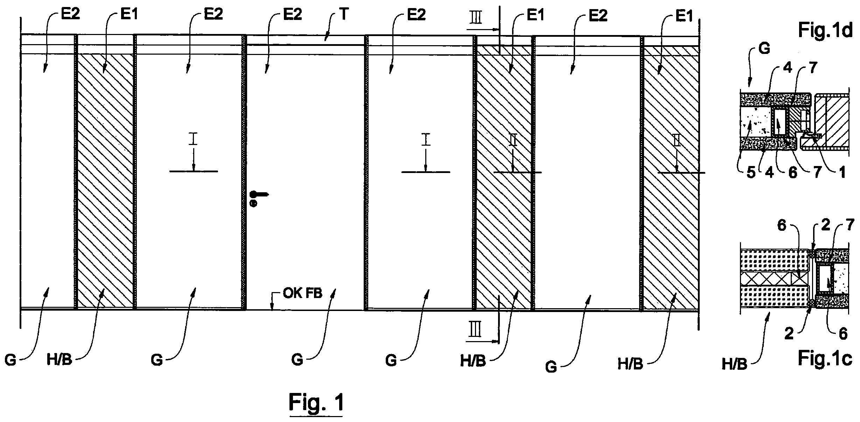

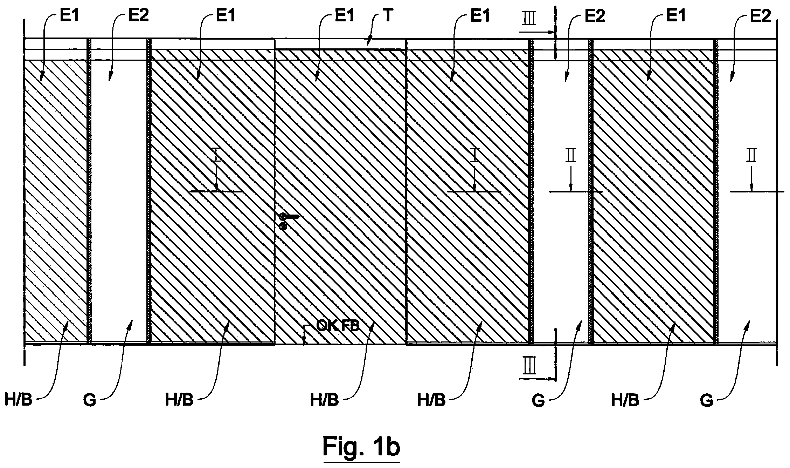

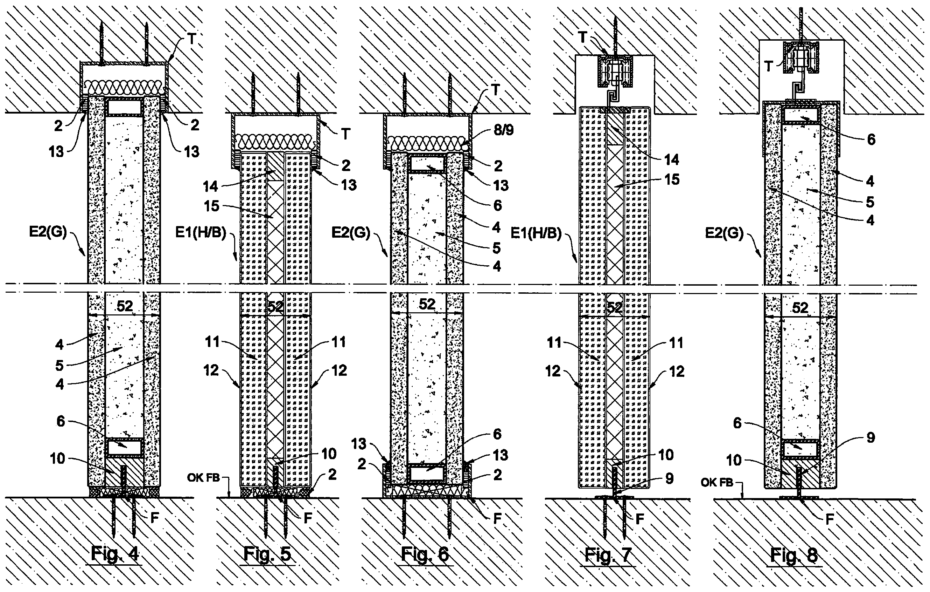

Fig. 1 zeigt in einer Ansicht von vorne eine erfindungsgemäße Trennwand zur Bildung eines Brandabschnitts in Räumen von Gebäuden, vorzugsweise für Flucht- und/oder Rettungswege. Die Trennwand besteht aus mehreren Einzelwandelementen E1 und E2 die in Fig. 1 in einer raumtrennenden Position bzw. einem raumtrennenden Zustand nebeneinander angeordnet sind. In Fig. 1 sind insgesamt acht Einzelwandelemente E1 und E2 dargestellt, drei Einzelwandelemente E1 mit einer nicht brennbaren Baustoffplatte B oder einem feuerfesten Holzelement H und fünf Einzelwandelemente E2 mit bzw. aus Brandschutzglas bzw. Brandschutzscheibe G, von denen eines als Brandschutztür ausgebildet ist. Die Einzelwandelemente E1 und E2 sind an einer im Deckenbereich des Brandabschnitts eines Raums eines Gebäudes angeordneten Deckenschiene T, welche den Einzelwandelementen E1 und E2 zu Trag- und/oder Führungszwecken dient, lösbar gehaltert, wie nachfolgend noch im Zusammenhang mit den Ausführungsbeispielen nach Fig. 4 bis Fig. 8 näher erläutert. Ferner weist die erfindungsgemäße Trennwand für die Einzelwandelemente E1 und E2 eine im Bodenbereich des Brandabschnitts des Raums des Gebäudes angeordnete Bodenschiene F auf, welche den Einzelwandelementen E1 und E2 zu Halte- und/oder Führungszwecken dient.

Wie anhand von Fig. 1 exemplarisch dargestellt, ist die erfindungsgemäße Trennwand mittels der Einzelwandelemente E1 und E2 modular zusammenfügbar, so dass eine hohe Variabilität in der Gestaltung der Trennwand gegeben ist, insbesondere da die Einzelwandelemente E1 und E2 der Trennwand quasi nach Art eines Baukastenprinzips zusammenstellbar und zusammenfügbar sind. Der so gegebene modulartige Aufbau von Trennwänden aus Einzelwandelementen E1 und E2 ermöglicht eine einfache Montage bzw. Demontage. Darüber hinaus sind die Einzelwandelemente E1 und E2 einfach und kostengünstig insbesondere zur Bildung einer anderen Trennwand wiederverwendbar sind, was insbesondere Änderungen hinsichtlich der Raumnutzung und/oder Raumaufteilung vereinfacht und kostengünstiger ermöglicht.

Bei einer Trennwand nach Fig. 1 mit modular zusammengefügten Einzelwandelementen E1 und E2 können die jeweiligen Einzelwandelemente E1 und E2 untereinander auch in anderen Anordnungen zu einer erfindungsgemäßen Trennwand zusammengefügt werden. In Fig. 1b ist beispielhaft eine alternative Anordnung von Einzelwandelementen E1 und E2 einer Trennwand dargestellt.

In der raumtrennenden Position bzw. dem raumtrennenden Zustand der in Fig. 1 bzw. Fig. 1b dargestellten Trennwand sind die Einzelwandelemente E1 und E2 derart angeordnet, dass die zwischen Boden und Decke senkrecht verlaufenden Stoßflächen von zwei nebeneinander angeordneten Einzelwandelementen E1 und E2 einander gegenüberstehen oder aneinander stoßen, vorzugsweise flächenbündig (vgl. beispielsweise Fig. 1c) und/oder formschlüssig (vgl. beispielsweise Fig. 1d). Dabei sind vorteilhafterweise die Seitenflächen beziehungsweise Hauptflächen der Einzelwandelemente E1 und E2 flächenbündig angeordnet. Vorteilhafterweise springen die Stoßflächen von zwei nebeneinander angeordneten Einzelwandelementen E1 und E2, von denen wenigstens ein Einzelwandelement E1 und/oder E2 als Tür bzw. Türblatt, insbesondere einer Brandschutztür, ausgebildet ist, unter Ausbildung eines Stufenfalzes zurück.

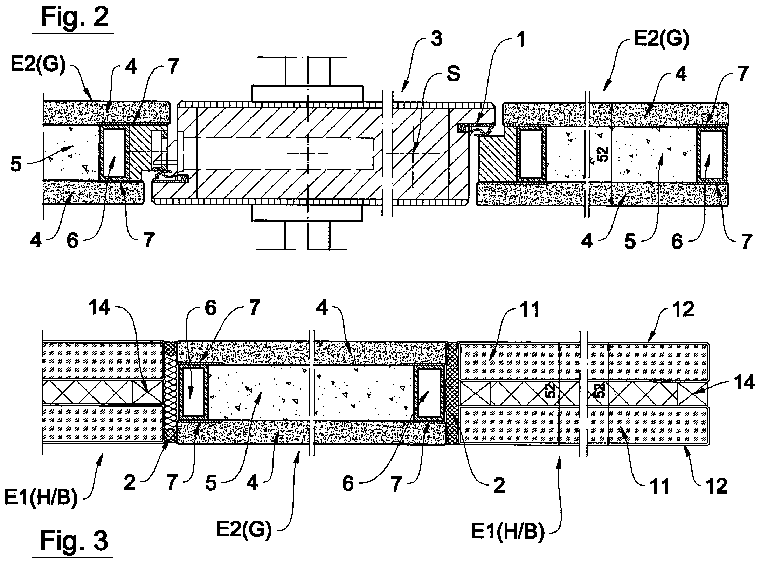

Das in Fig. 2 dargestellte Ausführungsbeispiel einer erfindungsgemäßen Trennwand zeigt in einer geschnittenen Teilansicht gemäß Schnittlinie I-I nach Fig. 1 die Ausbildung eines Türanschlags bei Verwendung eines als Tür bzw. Türblatt 3, insbesondere einer Brandschutztür, ausgebildeten Einzelwandelements E2. Die Brandschutztür 3 ist um eine Schwenkachse S verschwenkbar gelagert. Hierzu ist an der Deckenschiene T (in Fig. 2 nicht dargestellt) beziehungsweise der Bodenschiene F (in Fig. 2 nicht dargestellt) ein Drehzapfen angeordnet, welcher in ein korrespondierend ausgebildetes Drehlager am bzw. im angrenzenden Festelement, also Decke bzw. Boden, eingreift. Das als Tür bzw. Türblatt 3 ausgebildete Einzelwandelement E2 weist an seinen senkrecht verlaufenden Stoßflächen einen Stufenfalz auf, welcher mit einer Dichtung 1, vorliegend eine Lippendichtung, versehen ist. Die Dichtung 1 dichtet im geschlossenen Zustand der Tür 3 diese gegenüber den links und rechts der Tür 3 angeordneten, vorliegend als Brandschutzscheiben G ausgebildeten Einzelwandelemente E2 ab.

Das in Fig. 2 dargestellte Türblatt 3 nach Fig. 2 ist aus bzw. als Brandschutzscheibe G, vorzugsweise als Brandschutz-Ganzglastür, ausgebildet. In einer weiteren hier nicht dargestellten Ausführungsform kann das Türblatt 3 aus einer nicht brennbaren Baustoffplatte B oder einem feuerfesten Holzelement H, ausgebildet sein (vgl. auch Fig. 1b).

Die in Fig. 2 links und rechts neben der Tür 3 dargestellten Einzelwandelemente E2 sind als Brandschutzscheiben G ausgebildet. Die Brandschutzscheiben G der Einzelwandelemente E2 gemäß Fig. 2 sind mit zwei parallel zueinander und mittels eines Abstandshalters 6 voneinander beabstandet angeordneten Glasscheiben 4, aufgebaut, wobei der Raum zwischen den Glasscheiben 4 mit einem Brandschutzmaterial 5, vorliegend einem Gel-artigen Brandschutzmaterial, gefüllt ist. Durch eine Randbedruckung 7 der Glasscheiben 4 einer Brandschutzscheibe G wird der umlaufende Abstandhalter 6 abgedeckt, so dass dieser von außen nicht sichtbar ist. Die als Brandschutzscheiben G ausgebildeten Einzelwandelemente E2 links und rechts neben dem als Tür 3 ausgebildeten Einzelwandelement E2 weisen zumindest an den den Stoßflächen der Tür 3 direkt gegenüberstehenden Stoßflächen ebenfalls jeweils einen Stufenfalz auf, welcher mit dem jeweiligen Stufenfalz der Tür 3 korrespondiert und im geschlossenen Zustand der Tür 3 die Einzelwandelemente E2 entsprechend abdichtet.

Das in Fig. 3 dargestellte Ausführungsbeispiel einer erfindungsgemäßen Trennwand zeigt in einer geschnittenen Teilansicht gemäß Schnittlinie II-II nach Fig. 1 eine erfindungsgemäße Anordnung von Einzelwandelementen E1 und E2. Dabei ist zwischen zwei links und rechts dargestellten Einzelwandelementen E1, die aus nicht brennbaren Baustoffplatten B bzw. feuerfesten Holzelementen H ausgebildet sind, eine Einzelwandelement E2 angeordnet, welches als Brandschutzscheibe G ausgebildet ist. Die zwischen Boden und Decke senkrecht verlaufenden Stoßflächen der Einzelwandelementen E1 und E2 sind vorliegend im Wesentlichen abgestumpft ausgebildet (vgl. auch beispielhaft Fig. 1c). Ein beim nebeneinanderanordnen der Einzelwandelemente E1 und/oder E2 eventuell zwischen den Einzelwandelemente E1 und/oder E2 verbleibender Spalt ist mittels eines Dichtungselements, vorliegend mit einem Dichtungsprofil 2, abgedichtet. Das Dichtungselement 2 ist vorzugsweise mit wenigstens einer der Stoßflächen eines jeweiligen Einzelwandelements E1 bzw. E2 verbunden und vorteilhafterweise rückstandsfrei von diesem lösbar und/oder entfernbar. Das Dichtungselement 2 kann beispielsweise eine Dichtschnur oder ein Trockenbauprofil sein. Zudem ist die Verwendung eines intumeszierendes Materials für das Dichtungselement 2 vorgesehen. Auch kann das Dichtungselement 2 eine silikonartig verarbeitbare, Dichtungsmasse sein, welche vorteilhafterweise intumeszierend ist oder intumeszierende Materialen beinhaltet.

Das in Fig. 3 zwischen den dargestellten Einzelwandelemente E1, welche aus nicht brennbaren Baustoffplatten B bzw. feuerfesten Holzelementen H ausgebildet sind, angeordnete Einzelwandelement E2, welches als Brandschutzscheibe G ausgebildet ist, ist mit zwei parallel zueinander und mittels eines Abstandshalters 6 voneinander beabstandet angeordneten Glasscheiben 4, aufgebaut, wobei der Raum zwischen den Glasscheiben 4 mit einem Brandschutzmaterial 5, vorliegend einem Gel-artigen Brandschutzmaterial, gefüllt ist. Durch eine Randbedruckung 7 der Glasscheiben 4 der Brandschutzscheibe G ist der umlaufende Abstandhalter 6 abgedeckt, so dass dieser von außen nicht sichtbar ist.

Die in Fig. 3 links und rechts neben dem als Brandschutzscheibe G ausgebildeten Einzelwandelement E2 dargestellten, mit nicht brennbaren Baustoffplatten B bzw. feuerfesten Holzelementen H ausgebildeten Einzelwandelemente E1 sind jeweils mit zwei parallel zueinander und mittels eines Abstandshalters 14 voneinander beabstandet angeordneten Grundplatten 11, aufgebaut, wobei der Raum zwischen den Grundplatten 11 mit einer insbesondere nicht brennbaren Füllung 15 gefüllt ist. Die Grundplatten 11 sind dabei jeweils aus einer nicht brennbaren Baustoffplatte B oder einem feuerfesten Holzelement gefertigt, welche zumindest auf der jeweiligen Sichtseite mit einer nicht brennbaren Dekorschicht 12 verklebt ist. Zudem ist vorgesehen, dass auf der Dekorschicht 12 eine Deckschicht aus Melaminharz aufgebracht ist (hier nicht explizit dargestellt).

Fig. 2 und Fig. 3 zeigen, dass im Zusammenspiel von Einzelwandelementen E1 und E2 aus jeweils unterschiedlichen Brandschutzzwecken genügenden Materialien auf einfache Art und Weise eine modular montierbare bzw. demontierbare Trennwand zur Bildung eines Brandabschnitts gegeben ist. Die in den vorliegenden Ausführungsbeispielen dargestellte Trennwand weist einen flächenbündigen Gesamteindruck auf, insbesondere da die Einzelwandelemente E1 und E2 fluchtend zueinander angeordnet und ausgebildet sind.

Die in Fig. 4 bis Fig. 8 dargestellten Ausführungsbeispiele einer erfindungsgemäßen Trennwand unterscheiden sich durch die Anordnung und Ausgestaltung der jeweiligen Deckenschiene T im Deckenbereich eines Brandabschnitts und der jeweiligen Bodenschiene F im Bodenbereich des Brandabschnitts.

Fig. 4 zeigt als Brandschutzscheibe G ausgebildetes Einzelwandelement E2, welches in einer U-Profil-förmigen Deckenschiene T aus Metall getragen und geführt wird. Die Deckenschiene T ist in die Decke des Brandabschnitts eingelassen. Das Einzelwandelement 2 ist gegenüber der Deckenschiene T rauch- und/oder feuerdicht abgedichtet, vorliegend mittels Fugendichtmasse 13 und/oder einer Dichtungsmasse 2, beispielsweise Silikon und/oder einem intumeszierendem Material, und damit mit dieser verbunden. Dabei ragt der obere Rand des als Brandschutzscheibe G ausgebildeten Einzelwandelements E2 in die U-Profil-förmige Deckenschiene T ein. Ferner ist das als Brandschutzscheibe G ausgebildete Einzelwandelement E2 an bzw. mit einer auf dem Boden des Brandabschnitts angeordneten T-Profil-förmigen Bodenschiene F gehalten und geführt. Im Bodenbereich ist das Einzelwandelement E2 gegenüber der Bodenschiene F ebenfalls rauch- und/oder feuerdicht abgedichtet, vorliegend mittels einer Dichtungsanordnung oder einer Dichtungsmasse 2, beispielsweise Silikon und/oder einem intumeszierendem Material.

Das in Fig. 5 dargestellte Ausführungsbeispiel einer erfindungsgemäßen Trennwand unterscheidet sich von dem in Fig. 4 dargestellten Ausführungsbeispiel einer erfindungsgemäßen Trennwand durch die Ausgestaltung des Einzelwandelementes als auch der Anordnung der Deckenschiene T im Deckenbereich eines Brandabschnitts. Bei dem Einzelwandelement nach Fig. 5 handelt es sich um ein erfindungsgemäßes, mit nicht brennbaren Baustoffplatten B bzw. feuerfesten Holzelementen H ausgebildetes Einzelwandelement E1, welches in einer U-Profil-förmigen Deckenschiene T aus Metall getragen und geführt wird. Die Deckenschiene T ist dabei an der Decke des Brandabschnitts angeschraubt.

Das in Fig. 6 dargestellte Ausführungsbeispiel einer erfindungsgemäßen Trennwand unterscheidet sich von dem in Fig. 5 dargestellten Ausführungsbeispiel einer erfindungsgemäßen Trennwand durch die Ausgestaltung des Einzelwandelementes als auch der Bodenschiene F im Bodenbereich des Brandabschnitts. Bei dem Einzelwandelement nach Fig. 6 handelt es sich um ein als Brandschutzglas ausgebildetes Einzelwandelement E2, welches in einer U-Profil-förmigen Deckenschiene T aus Metall getragen und geführt wird. Die Deckenschiene T ist, wie bei Fig. 5, an der Decke des Brandabschnitts angeschraubt. Im Bodenbereich des Brandabschnitts ist das als Brandschutzscheibe G ausgebildete Einzelwandelement E2 in bzw. mit einer auf dem Boden des Brandabschnitts angeordneten U-Profil-förmigen Bodenschiene F gehalten und geführt. Im Bodenbereich ist das Einzelwandelement E2 gegenüber der Bodenschiene F ebenfalls rauch- und/oder feuerdicht abgedichtet, vorliegend mittels Fugendichtmasse 13 und/oder einer Dichtungsmasse 2, beispielsweise Silikon und/oder einem intumeszierendem Material, und damit mit dieser verbunden.

Bei den in Fig. 7 und Fig. 8 dargestellten Ausführungsbeispielen einer erfindungsgemäßen Trennwand sind die Einzelwandelemente E1 bzw. E2 beweglich an einer in die Decke des Brandabschnitts eingelassenen Deckenschiene T aufgehängt und so getragen und geführt. Die Einzelwandelemente E1 bzw. E2 sind dabei rollengelagert in und entlang der Deckenschiene T verfahrbar. Die Deckenschiene T ist im Wesentlichen U-Profilförmig ausgebildet und aus Metall. Im Bodenbereich des Brandabschnitts ist eine T-Profil-förmige Bodenschiene F angeordnet, welche die Einzelwandelement E1 bzw. E2 hält und führt, insbesondere bei Verschiebung bzw. Verfahren der Einzelwandelemente E1 bzw. E2. Bei dem Einzelwandelement nach Fig. 7 handelt es sich um ein erfindungsgemäßes, mit nicht brennbaren Baustoffplatten B bzw. feuerfesten Holzelementen H ausgebildetes Einzelwandelement E1. Bei dem Einzelwandelement nach Fig. 8 handelt es sich um ein als Brandschutzglas ausgebildetes Einzelwandelement E2. Die Einzelwandelemente E1 bzw. E2 weisen an ihren unteren, dem Boden zugewandten Kanten bzw. Flächen eine Aufnahme 10 für den zur Decke weisenden Schenkel der T-Profil-förmigen Bodenschiene F auf, so dass der zur Decke weisende Schenkel der T-Profil-förmigen Bodenschiene F in die Aufnahme 10 des jeweiligen Einzelwandelementes E1 bzw. E2 eingreifen kann. Die Aufnahme 10 ist dabei vorteilhafterweise in dem jeweiligen Abstandshalter 6 bzw. 14 der Einzelwandelemente E2 bzw. E1 ausgebildet oder als zusätzliches Profilelement 9 vorgesehen.

Durch die bewegliche Aufhängung der Einzelwandelemente E1 bzw. E2 gemäß den Ausführungsbeispielen nach Fig. 7 und Fig. 8 an der Deckenschiene T ist es möglich, einzelne oder alle Einzelwandelemente E1 bzw. E2 der Trennwand von einer raumtrennenden Position in eine raumfreigebende Position zu überführen. Hierzu können die Einzelwandelemente E1 bzw. E2 vorteilhafterweise gegenüber der Deckenschiene T als auch der Bodenschiene T gedreht beziehungsweise verschwenkt werden und sodann entlang der Deckenschiene T verschoben werden. Die Verdrehbarkeit beziehungsweise Verschwenkbarkeit unterstützt zudem die erfindungsgemäße einfache Ein- und Ausbaubarkeit der erfindungsgemäßen modularen Trennwand.

Die in den Figuren der Zeichnung dargestellten und die im Zusammenhang beschriebenen Ausführungsbeispiele dienen lediglich der Erläuterung der Erfindung, wie in den Ansprüchen definiert.

### Bezugszeichenliste:

- B: nicht brennbare Baustoffplatte
- E1: Einzelwandelement (nicht brennbare Baustoffplatte (B) bzw. feuerfestes Holzpaneel (H))
- E2: Einzelwandelement (Brandschutzscheibe (G))
- F: Bodenschiene
- G: Brandschutzscheibe
- H: feuerfestes Holzelement/Holzpaneel
- S: Schwenkachse
- T: Deckenschiene
- 1: Dichtung
- 2: Dichtungselement/Dichtungsprofil/Dichtungsmasse
- 3: Tür/Türblatt
- 4: Glasscheibe
- 5: Brandschutzmaterial
- 6: Abstandshalter
- 7: Randbedruckung
- 8: Silikon/intumeszierendes Material
- 9: Profilelement
- 10: Aufnahme
- 11: Grundplatte
- 12: Dekorschicht
- 13: Fugendichtmasse
- 14: Abstandhalter/Stabilisator
- 15: Füllung/ nicht brennbare Füllung

## Patentansprüche

1. Trennwand mit wenigstens zwei Einzelwandelementen (E1, E2) zur Bildung eines Brandabschnitts in Räumen von Gebäuden, wobei wenigstens ein erstes Einzelwandelement (E1) der wenigstens zwei Einzelwandelemente (E1, E2) eine nicht brennbare Baustoffplatte (B) oder ein feuerfestes Holzelement (H) ist,
und
wenigstens ein zweites Einzelwandelement (E2) der wenigstens zwei Einzelwandelemente (E1, E2) entweder (i) eine Brandschutzscheibe (G) aufweist oder (ii) eine Brandschutzscheibe (G) ist,
wobei die Einzelwandelemente (E1, E2) jeweils zur lösbaren Halterung an bzw. in einer im Deckenbereich des Brandabschnitts angeordneten Deckenschiene (T) ausgebildet sind, welche den Einzelwandelementen (E1, E2) zu Trag- und/oder Führungszwecken dient,
und wobei die Einzelwandelemente (E1, E2) in einem raumfreigebenden Zustand bzw. in einer raumfreigebenden Position voneinander lösbar, insbesondere rückstandsfrei lösbar, und wiederverwendbar sind.

2. Trennwand nach Anspruch 1, **dadurch gekennzeichnet, dass** die an bzw. in der Deckenschiene (T) gehalterten Einzelwandelemente (E1, E2) modular zusammengefügt sind oder zusammenfügbar sind.

3. Trennwand nach Anspruch 1 oder Anspruch 2, **dadurch gekennzeichnet, dass** die Einzelwandelemente (E1, E2) an der Deckenschiene (T) aufgehängt sind, vorzugsweise beweglich aufgehängt sind.

4. Trennwand nach einem der Ansprüche 1 bis 3, **dadurch gekennzeichnet, dass** die Einzelwandelemente (E1, E2) zur lösbaren Halterung an bzw. in einer im Bodenbereich des Brandabschnitts angeordneten Bodenschiene (F) ausgebildet sind, welche den Einzelwandelementen (E1, E2) zu Halte- und/oder Führungszwecken dient.

5. Trennwand nach einem der Ansprüche 1 bis 4, **dadurch gekennzeichnet, dass** senkrecht verlaufende Stoßflächen von zwei in einem raumtrennenden Zustand bzw. in einer raumtrennenden Position nebeneinander angeordneten Einzelwandelementen (E1, E2) einander gegenüberstehen oder aneinander stoßen, vorzugsweise flächenbündig und/oder formschlüssig.

6. Trennwand nach einem der Ansprüche 1 bis 5, **dadurch gekennzeichnet, dass** zwischen den senkrecht verlaufenden Stoßflächen von zwei in einem raumtrennenden Zustand bzw. in einer raumtrennenden Position nebeneinander angeordneten Einzelwandelementen (E1, E2) wenigstens ein Dichtungselement (1, 2), vorzugsweise ein Dichtungsprofil (1, 2) oder eine Dichtungsmasse, angeordnet ist.

7. Trennwand nach Anspruch 6, **dadurch gekennzeichnet, dass** das wenigstens eine Dichtungsprofil (1, 2) an der senkrecht verlaufenden Stoßfläche wenigstens eines Einzelwandelementes (E1, E2) befestigt ist bzw. befestigbar ist.

8. Trennwand nach Anspruch 6 oder Anspruch 7, **dadurch gekennzeichnet, dass** das wenigstens eine Dichtungselement (1, 2) ein intumeszierendes Material aufweist oder aus einem intumeszierenden Material ist.

9. Trennwand nach einem der Ansprüche 1 bis 8, **dadurch gekennzeichnet, dass** wenigstens eine der senkrechten Stoßflächen eines Einzelwandelementes (E1, E2) im Wesentlichen abgestumpft ausgebildet ist.

10. Trennwand nach einem der Ansprüche 1 bis 9, **dadurch gekennzeichnet, dass** bei zwei in einem raumtrennenden Zustand bzw. in einer raumtrennenden Position nebeneinander angeordneten Einzelwandelementen (E1, E2) die senkrecht verlaufende Stoßfläche des einen Einzelwandelements (E1) gegenüber der senkrecht verlaufenden Stoßfläche des anderen Einzelwandelements (E2) unter Ausbildung eines Stufenfalzes zurück springt.

11. Trennwand nach einem der Ansprüche 1 bis 10, **dadurch gekennzeichnet, dass** wenigstens ein Einzelwandelement (E1, E2) als Brandschutztür ausgebildet ist.

12. Trennwand nach einem der Ansprüche 1 bis 11, **dadurch gekennzeichnet, dass** wenigstens ein Einzelwandelement (E1, E2) händisch und/oder motorisch von einer raumtrennenden Position in eine raumfreigebende Position überführbar ist.

13. Trennwand nach einem der Ansprüche 1 bis 12, **dadurch gekennzeichnet, dass** die Brandschutzscheibe (G) bzw. Brandschutztür aus einem Verbund von wenigstens zwei parallel zueinander angeordneten Glasscheiben (4) besteht, zwischen denen jeweils wenigstens eine Brandschutzschicht (5) angeordnet ist.

14. Trennwand nach einem der Ansprüche 1 bis 13, **dadurch gekennzeichnet, dass** die nicht brennbare Baustoffplatte (B) oder das feuerfeste Holzelement (H) zwei parallel zueinander angeordnete Grundplatten (11) aufweist, die mittels eines zwischen den Grundplatten (11) angeordneten Abstandhalters (14) voneinander beabstandet sind.

15. Trennwand nach Anspruch 14, **dadurch gekennzeichnet, dass** der Abstandhalter (14) die nicht brennbare Baustoffplatte (B) bzw. das feuerfeste Holzelement (H) im Brandfall stabilisiert.

16. Trennwand nach Anspruch 15, **dadurch gekennzeichnet, dass** der die nicht brennbare Baustoffplatte (B) beziehungsweise das feuerfeste Holzelement (H) insbesondere im Brandfall stabilisierende Abstandshalter (14) profilartig ausgebildet und aus einem Holzwerkstoff, einem Verbundmaterial aus Holz und Stahl, oder einem Verbundmaterial aus Kalziumsilikat und Stahl und/oder Holz ist.

17. Trennwand nach einem der Ansprüche 1 bis 16, **dadurch gekennzeichnet, dass** die Grundplatte (11) der nicht brennbaren Baustoffplatte (B) aus einem nicht brennbaren Material und einer mit der Grundplatte (11) verklebten, nicht brennbaren Dekorschicht (12) besteht, wobei auf der Dekorschicht (12) vorzugsweise eine Deckschicht aus Melaminharz aufgebracht ist.

18. Trennwand nach einem der Ansprüche 1 bis 17, **dadurch gekennzeichnet, dass** das feuerfeste Holzelement (H) bzw. die Grundplatten (11) des feuerfesten Holzelements (H) aus Massivholz oder einem Holzwerkstoff ist bzw. sind.

## Claims

1. A partition wall comprising at least two individual wall elements (E1, E2) for forming a fire compartment in rooms of buildings, wherein at least one first individual wall element (E1) of the at least two individual wall elements (E1, E2) is a non-combustible building material panel (B) or a fireproof wooden element (H),
and
at least one second individual wall element (E2) of the at least two individual wall elements (E1, E2) either (i) comprises a fire protection pane (G) or (ii) is a fire protection pane (G),
wherein the individual wall elements (E1, E2) are each designed for being mounted in a detachable manner on or in a ceiling rail (T) arranged in the ceiling area of the fire compartment, which ceiling rail (T) serves for supporting and/or guiding the individual wall elements (E1, E2),
and wherein the individual wall elements (E1, E2) can be detached from one another in a space-clearing state or in a space-clearing position, in particular they can be detached from one another without leaving any residue, and can be reused.

2. A partition wall according to claim 1, **characterized in that** the individual wall elements (E1, E2) held on or in the ceiling rail (T) are joined together or can be joined together in a modular manner.

3. A partition according to claim 1 or claim 2, **characterized in that** the individual wall elements (E1, E2) are suspended from the ceiling rail (T), preferably are suspended movably.

4. A partition wall according to one of the claims 1 to 3, **characterized in that** the individual wall elements (E1, E2) are configured for being mounted in a detachable manner on or in a floor rail (F) arranged in the floor area of the fire compartment, which floor rail serves for holding and/or guiding the individual wall elements (E1, E2).

5. A partition wall according to one of the claims 1 to 4, **characterized in that** vertically extending abutment surfaces of two individual wall elements (E1, E2) arranged next to one another in a room-separating state or in a room-separating position face one another or abut one another, preferably in a flush and/or form-fitting manner.

6. A partition wall according to one of the claims 1 to 5, **characterized in that** at least one sealing element (1, 2), preferably a sealing profile (1, 2) or a sealing compound, is arranged between the vertically extending abutment surfaces of two individual wall elements (E1, E2) arranged next to one another in a space-separating state or in a space-separating position.

7. A partition wall according to claim 6, **characterized in that** the at least one sealing profile (1, 2) is fastened or can be fastened to the vertically extending abutment surface of at least one single wall element (E1, E2).

8. A partition wall according to claim 6 or claim 7, **characterized in that** the at least one sealing element (1, 2) comprises an intumescent material or is made of an intumescent material.

9. A partition wall according to one of the claims 1 to 8, **characterized in that** at least one of the vertically extending abutment surfaces of an individual wall element (E1, E2) is essentially truncated.

10. A partition wall according to one of the claims 1 to 9, **characterized in that** in the case of two individual wall elements (E1, E2) arranged next to one another in a room-separating state or in a room-separating position, the vertically extending abutment surface of a single wall element (E1) opposite the vertically extending abutment surface of the other single wall element (E2) recoils backwards to form a stepped fold.

11. A partition wall according to one of the claims 1 to 10, **characterized in that** at least one single wall element (E1, E2) is designed as a fire protection door.

12. A partition wall according to one of the claims 1 to 11, **characterized in that** at least one single wall element (E1, E2) can be transferred manually and/or by means of a motor from a space-separating position to a space-clearing position.

13. A partition wall according to one of the claims 1 to 12, **characterized in that** the fire protection pane (G) or fire protection door consists of a composite of at least two glass panes (4) arranged parallel to each other, between which at least one fire protection layer (5) is arranged.

14. A partition wall according to one of the claims 1 to 13, **characterized in that** the non-combustible building material panel (B) or the fireproof wooden element (H) comprises two base plates (11) arranged parallel to one another, which are spaced apart from each other by means of a spacer (14) arranged between the base plates (11).

15. A partition wall according to claim 14, **characterized in that** the spacer (14) stabilizes the non-combustible building material panel (B) or the fireproof wooden element (H) in the event of a fire.

16. A partition wall according to claim 15, **characterized in that** the spacer (14) stabilizing the non-combustible building material panel (B) or the fireproof wooden element (H), in particular in the event of fire, is designed like a profile and is made of a wood material, a composite material of wood and steel, or a composite material of calcium silicate and steel and/or wood.

17. A partition wall according to one of the claims 1 to 16, **characterized in that** the base plate (11) of the non-combustible building material panel (B) consists of a non-combustible material and a non-combustible decorative layer (12) glued to the base plate (11), wherein a cover layer made of melamine resin is preferably applied onto the decorative layer (12).

18. A partition wall according to one of the claims 1 to 17, **characterized in that** the fireproof wooden element (H) or the base plates (11) of the fireproof wooden element (H) is or are made of solid wood or a wood material.

## Revendications

1. Cloison comprenant au moins deux éléments de paroi individuels (E1, E2) pour former une section coupe-feu dans des pièces de bâtiments, dans lequel au moins un premier élément de paroi individuel (E1) des au moins deux éléments de paroi individuels (E1, E2) est un panneau de construction incombustible (B) ou un élément en bois ignifuge (H),
et
au moins un deuxième élément de paroi individuel (E2) des au moins deux éléments de paroi individuels (E1, E2) (i) comprend une vitre pare-feu (G) ou (ii) est une vitre pare-feu (G),
dans lequel les éléments de paroi individuels (E1, E2) sont chacun configurés pour être fixé à ou dans un rail de plafond (T) disposé dans la zone de plafond de la section coupe-feu, lequel rail de plafond sert à porter et/ou à guider les éléments de paroi individuels (E1, E2),
et dans lequel les éléments de paroi individuels (E1, E2) peuvent être utilisés dans un état dégageant un espace ou dans une position dégageant un espace de manière amovible l'un de l'autre, notamment amovible sans laisser des résidus, et ils peuvent être réutilisés.

2. Cloison selon la revendication 1, **caractérisée en ce que** les éléments de paroi individuels (E1, E2) retenus au ou dans le rail de plafond (T) sont assemblés ou peuvent être assemblés de manière modulaire.

3. Cloison selon la revendication 1 ou la revendication 2, **caractérisée en ce que** les éléments de paroi individuels (E1, E2) sont suspendus au rail de plafond (T), de préférence suspendus de manière mobile.

4. Cloison selon l'une des revendications 1 à 3, **caractérisée en ce que** les éléments de paroi individuels (E1, E2) sont configurés pour être fixés de manière amovible à ou dans un rail de fond (F) disposé dans la zone de fond de la section coupe-feu, lequel rail de fond sert à retenir et/ou guider les éléments de paroi individuels (E1, E2).

5. Cloison selon l'une des revendications 1 à 4, **caractérisée en ce que** des surfaces d'appui, qui s'étendent verticalement, de deux éléments de paroi individuels (E1, E2) juxtaposés l'un à l'autre dans un état séparant un espace ou dans une position séparant un espace font face l'une à l'autre ou sont adjacentes l'une à l'autre, de préférence de manière affleurant et/ou par complémentarité de formes.

6. Cloison selon l'une des revendications 1 à 5, **caractérisée en ce qu'**au moins un élément d'étanchéité (1, 2), de préférence un profilé d'étanchéité (1, 2) ou un matériau de scellement, est disposé entre les surfaces d'appui s'étendant verticalement de deux éléments de paroi individuels (E1, E2) juxtaposés l'un à l'autre dans un état séparant un espace ou dans une position séparant un espace.

7. Cloison selon la revendication 6, **caractérisée en ce que** l'au moins un profilé d'étanchéité (1, 2) est fixé ou peut être fixé à la surface d'appui s'étendant verticalement d'au moins un élément de paroi individuel (E1, E2).

8. Cloison selon la revendication 6 ou la revendication 7, **caractérisée en ce que** l'au moins un profilé d'étanchéité (1, 2) comprend un matériau intumescent ou est composé d'un matériau intumescent.

9. Cloison selon l'une des revendications 1 à 8, **caractérisée en ce qu'**au moins une des surfaces d'appui s'étendant verticalement d'un élément de paroi individuel (E1, E2) est essentiellement en forme tronquée.

10. Cloison selon l'une des revendications 1 à 9, **caractérisée en ce que** pour deux éléments de paroi individuels (E1, E2) juxtaposés l'un à l'autre dans un état séparant un espace ou dans une position séparant un espace la surface d'appui s'étendant verticalement de l'un élément de paroi individuel (E1) est en retrait par rapport à la surface d'appui s'étendant verticalement de l'autre élément de paroi individuel (E2) en formant une feuillure à épaulement.

11. Cloison selon l'une des revendications 1 à 10, **caractérisée en ce qu'**au moins un élément de paroi individuel (E1, E2) est configuré en tant que porte coupe-feu.

12. Cloison selon l'une des revendications 1 à 11, **caractérisée en ce qu'**au moins un élément de paroi individuel (E1, E2) peut être transféré manuellement et/ou de manière motorisée d'une position séparant un espace à une position dégageant un espace.

13. Cloison selon l'une des revendications 1 à 12, **caractérisée en ce que** la vitre pare-feu (G) ou la porte coupe-feu consiste en un composite d'au moins deux plaques de verre (4) disposées parallèlement l'une à l'autre, entre lesquelles au moins une couche coupe-feu (5) est respectivement disposée.

14. Cloison selon l'une des revendications 1 à 13, **caractérisée en ce que** le panneau de construction incombustible (B) ou l'élément en bois (H) ignifuge comprend deux plaques de base (11) disposées parallèlement l'une par rapport à l'autre, qui sont espacées l'une de l'autre par moyen d'un écarteur (14) disposé entre les plaques de base (11).

15. Cloison selon la revendication 14, **caractérisée en ce que** l'écarteur (14) stabilise le panneau de construction incombustible (B) ou l'élément en bois ignifuge (H) en cas d'incendie.

16. Cloison selon la revendication 15, **caractérisée en ce que** l'écarteur (14), qui stabilise le panneau de construction incombustible (B) ou l'élément en bois ignifuge (H, notamment en cas d'incendie, est en forme d'un profilé et est fabriqué en un matériau en bois, en un matériau composite de bois et d'acier ou en un matériau composite de silicate de calcium et d'acier et/ou de bois.

17. Cloison selon l'une des revendications 1 à 16, **caractérisée en ce que** la plaque de base (11) du panneau de construction incombustible (B) est composée d'un matériau incombustible et d'une couche décorative (12) incombustible collée avec la plaque de base (11), dans lequel une couche supérieure en résine de mélamine est de préférence appliquée sur la couche décorative (12).

18. Cloison selon l'une des revendications 1 à 17, **caractérisée en ce que** l'élément en bois ignifuge (H) ou les plaques de base (11) de l'élément en bois ignifuge (H) est ou sont fabriqué(es) en bois massif ou en un matériau en bois.
